(19) Europäisches Patentamt
European Patent Office
Office européen des brevets

(11) **EP 3 470 496 A1**

(12) **EUROPÄISCHE PATENTANMELDUNG**

(43) Veröffentlichungstag:
**17.04.2019   Patentblatt 2019/16**

(51) Int Cl.:
*C09K 19/30* (2006.01)      *A01K 13/00* (2006.01)
*G02B 1/04* (2006.01)      *G02C 7/10* (2006.01)

(21) Anmeldenummer: **18200153.7**

(22) Anmeldetag: **12.10.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **13.10.2017   DE 102017123863**

(71) Anmelder:
• **Lapanik, Valeri I.**
  **220094 Minsk (BY)**
• **Scherer, Martin**
  **63769 Aschaffenburg (DE)**

• **Vath, Frank**
  **63839 Klein-Wallstadt (DE)**

(72) Erfinder:
• **Lapanik, Valeri I.**
  **220094 Minsk (BY)**
• **Scherer, Martin**
  **63769 Aschaffenburg (DE)**
• **Vath, Frank**
  **63839 Klein-Wallstadt (DE)**

(74) Vertreter: **Deckers, Hellmuth Alexander**
  **Kanzlei Dr. Deckers**
  **Breitbachstrasse 15**
  **55218 Ingelheim am Rhein (DE)**

(54)   **BRILLE MIT FERNAUSLÖSBARER VERDUNKLUNG**

(57)   Die Erfindung betrifft Mischungen M aus flüssigkristallinen Materialien, enthaltend:

Hauptkomponenten A (Massenanteil der genannten Komponente in der Mischung von jeweils mindestens 10 % bis 26 %): A1 4-(4-n-propylcyclohexyl)-phenylisothiocyanat; A2 4-(4-n-hexylcyclohexyl)-phenylisothiocyanat; A3 4-(4-n-propylcyclohexyl)-benzonitril; A4 4-(4-(4-n-pentylcyclo-hexyl)-cyclohexyl)-phenylisothiocyanat;

Sekundärkomponenten B (Massenanteil der genannten Komponente in der Mischung von jeweils mindestens 2 % bis weniger als 10 %): B1 4-(4-n-butylcyclohexyl)-phenylisothiocyanat; B2 4-(4-n-octylcyclohexyl)-phenylisothiocyanat; B3 4-(4-n-pentylcyclohexyl)-fluorbenzol; B4 4-(4-(4-n-propyl-cyclohexyl)-cyclohexyl)-benzonitril; B5 4-(4-(4-n-pentylcyclohexyl)-cyclohexyl)-benzonitril; B6 4-(4-(4-n-propylcyclohexyl)-cyclohexyl)-phenylisothiocyanat;

Tertiärkomponenten C (Massenanteil der genannten Komponente in der Mischung von jeweils 0,3 % bis höchstens 2 %): C1 4-(4-n-heptylcyclohexyl)-phenylisothiocyanat; C2 4-(4-(2-(4-n-propyl-cyclohexyl)-ethyl)-phenyl)-phenylisothiocyanat; C3 4-(4-(2-(4-n-pentylcyclohexyl)-ethyl)-phenyl)-phenylisothiocyanat; C4 4-(4-(2-(4-(4-n-butylcyclohexyl)-phenyl)-ethyl)-cyclohexyl)-phenylisothiocyanat; C5 4-(4-(2-(4-(4-n-hexylcyclohexyl)-phenyl)-ethyl)-cyclohexyl)-phenylisothiocyanat;

Quartärkomponenten D (Massenanteil der genannten Komponente in der Mischung von 0,1 % bis 2,5 %): D1 4-(4-n-pentylcyclohexyl)phenylisothiocyanat; sowie Sichtfenster (161, 162, 361, 362) für eine Brille (11) bestehend aus einer Zelle (4), die mit einer Flüssigkristall-Mischung M gefüllt ist, und eine Brille (11) für Tiere mit fernauslösbarer Verdunklung umfassend ein Sichtfenster (161, 162, 361, 362) für jedes Auge.

Fig. 1

EP 3 470 496 A1

**Beschreibung**

Die Erfindung betrifft eine Brille insbesondere für Tiere mit fernauslösbarer Verdunklung, und eine dafür angepasste Flüssigkristallmischung.

Eine Brille für Tiere mit fernauslösbarer Verdunklung ist bekannt aus der US-Patentschrift 6,311,645 B1. Eine derartige Brille umfasst ein Sichtfenster für jedes Auge, eine auf den Kopf des Tieres anzupassende Halterung für die Sichtfenster, und eine Steuerung für die Sichtfenster. Jedes Sichtfenster wirkt als Ventil für Licht und kann in einen offenen, lichtdurchlässigen Zustand und in einen geschlossenen, im wesentlichen lichtundurchlässigen Zustand versetzt werden durch eine Steuerung, die aus der Ferne kontrolliert werden kann durch eine Bedienungs- und Sendevorrichtung sowie eine Empfangsvorrichtung, die mit der Brille verbunden ist. Diese Sichtfenster sind elektro-optisch in die genannten Zustände zu versetzen, sie enthalten ein flüssigkristallines Material, und Polarisationsfilter. Über die Natur der geeigneten flüssigkristallinen Materialien, sowie über Anforderungen an diese Materialien wird in diesem Dokument keine Aussage getroffen.

Bei den Untersuchungen, die der vorliegenden Erfindung zugrundelagen, wurde gefunden, dass herkömmliche flüssigkristalline Materialien oder herkömmliche Mischungen von flüssigkristallinen Materialien, wie sie beispielsweise in Anzeigetafeln von elektrischen Instrumenten, Bildschirmen für elektronische Rechner, oder für Fernsehgeräte verwendet werden, nicht geeignet sind. Diese Materialien sind für den Betrieb bei Raumtemperatur oder leicht erhöhter Temperatur ausgelegt, meist für Temperaturbereiche zwischen 10 °C und 60 °C. Der Temperaturbereich für die Ausbildung von flüssigkristallinen Phasen, meist nematischen Phasen, in geeigneten organischen Molekülen reicht üblicherweise von ca. 15 °C bis zu ca. 160 °C (M. Schadt, Annu. Rev. Mater. Sci. 1997, Seite 311), wobei die Temperaturspanne, innerhalb welcher ein definierter Stoff eine nematische Phase bildet, üblicherweise zwischen 10 K und 130 K betragen kann.

Des weiteren sind für den erfindungsgemäßen Einsatzzweck derartige flüssigkristalline Materialien erforderlich, die zusätzlich noch unempfindlich gegen Stöße sind. Da die Wirkung der flüssigkristallinen Materialien in einer Anordnung für eine fernauslösbare Verdunklung auf der Ausrichtung der diese Materialien bildenden Moleküle, meist im wesentlichen parallel zu der Richtung eines angelegten elektrischen Feldes beruht, kann die Orientierung durch mechanische Einwirkungen von außen wie Vibrationen oder Stößen, also plötzlichen Beschleunigungen oder Abbremsungen, gestört werden.

Es war daher die Aufgabe der vorliegenden Erfindung, flüssigkristalline Materialien aufzufinden, die einen für den Zweck angepassten Temperaturbereich der flüssigkristallinen Phase aufweisen, der sich mindestens über den Bereich von - 20 °C bis + 50 °C erstreckt, und bezüglich ihrer Orientierung beispielsweise in einem angelegten elektrischen Feld mechanisch unempfindlich, also insbesondere stoßfest, sind.

Für mechanische Stabilität sind solche flüssigkristallinen Materialien besonders geeignet, die nematische Phasen ausbilden, da diese wesentlich unempfindlicher auf Vibration und Stöße reagieren als flüssigkristalline Phasen mit höherer Ordnung. Daher werden flüssigkristalline Materialien für die Erfindung bevorzugt, die in dem oben bezeichneten Temperaturbereich nematische Phasen ausbilden.

Geeignete flüssigkristalline Materialien sollen im angegebenen Temperaturbereich sowohl eine möglichst hohe Lichtdurchlässigkeit im "offenen" Zustand, als auch eine möglichst geringe Lichtdurchlässigkeit im "geschlossenen" Zustand besitzen. Im geschlossenen Zustand soll das Fenster daher im wesentlichen lichtundurchlässig sein. Als "im wesentlichen lichtundurchlässig" wird hier ein Sichtfenster bezeichnet, das durch eine dazu geeignete Einrichtung eine Transmission für Licht im sichtbaren Bereich von höchstens 20 % in der Einstellung "undurchlässig" aufweist. Im offenen Zustand soll die Transmission für Licht im sichtbaren Bereich mindestens 50 % betragen. Dieser relativ niedrige Wert ist durch Polarisationsfilter bedingt, die zwingend vorhandener Bestandteil eines Sichtfensters mit nematischen flüssigkristallinen Materialien sind, und nur Licht einer bestimmten Polarisationsrichtung (Richtung des elektrischen Feldvektors) durchlassen und daher die Transmission vermindern.

Bisher waren keine Materialien bekannt, die sowohl die Bedingung für den oben bezeichneten Temperaturbereich erfüllen, als auch die notwendige Unempfindlichkeit gegen Stöße oder Vibrationen aufweisen.

Die Aufgabe wurde gelöst durch Mischungen **M** aus flüssigkristallinen Materialien, auch als "Flüssigkristallmischung" bezeichnet, enthaltend die folgenden Komponenten:

Hauptkomponenten (Massenanteil der genannten Komponente in der Mischung von jeweils mindestens 10 % bis 26 %):

A1 - 4-(4-n-propyl-cyclohexyl)-phenylisothiocyanat
A2 - 4-(4-n-hexyl-cyclohexyl)-phenylisothiocyanat
A3 - 4-(4-n-propyl-cyclohexyl)-benzonitril
A4 - 4-(4-(4-n-pentyl-cyclohexyl)-cyclohexyl)-phenylisothiocyanat

Sekundärkomponenten (Massenanteil der genannten Komponente in der Mischung von jeweils mindestens 2 % bis weniger als 10 %):

B1 - 4-(4-n-butylcyclohexyl)-phenylisothiocyanat
B2 - 4-(4-n-octylcyclohexyl)-phenylisothiocyanat
B3 - 4-(4-n-pentylcyclohexyl)-fluorbenzol
B4 - 4-(4-(4-n-propylcyclohexyl)-cyclohexyl)-benzonitril
B5 - 4-(4-(4-n-pentylcyclohexyl)-cyclohexyl)-benzonitril
B6 - 4-(4-(4-n-propylcyclohexyl)-cyclohexyl)-phenylisothiocyanat

Tertiärkomponenten (Massenanteil der genannten Komponente in der Mischung von jeweils 0,3 % bis höchstens 2 %):

C1 - 4-(4-n-heptylcyclohexyl)-phenylisothiocyanat
C2 - 4-(4-(2-(4-n-propylcyclohexyl)-ethyl)-phenyl)-phenylisothiocyanat
C3 - 4-(4-(2-(4-n-pentylcyclohexyl)-ethyl)-phenyl)-phenylisothiocyanat
C4 - 4-(4-(2-(4-(4-n-butylcyclohexyl)-phenyl)-ethyl)-cyclohexyl)-phenylisothiocyanat
C5 - 4-(4-(2-(4-(4-n-hexylcyclohexyl)-phenyl)-ethyl)-cyclohexyl)-phenylisothiocyanat

Quartärkomponenten (Massenanteil der genannten Komponente in der Mischung von jeweils 0,1 % bis 2,5 %):

D1 - 4-(4-n-pentylcyclohexyl)-phenylisothiocyanat

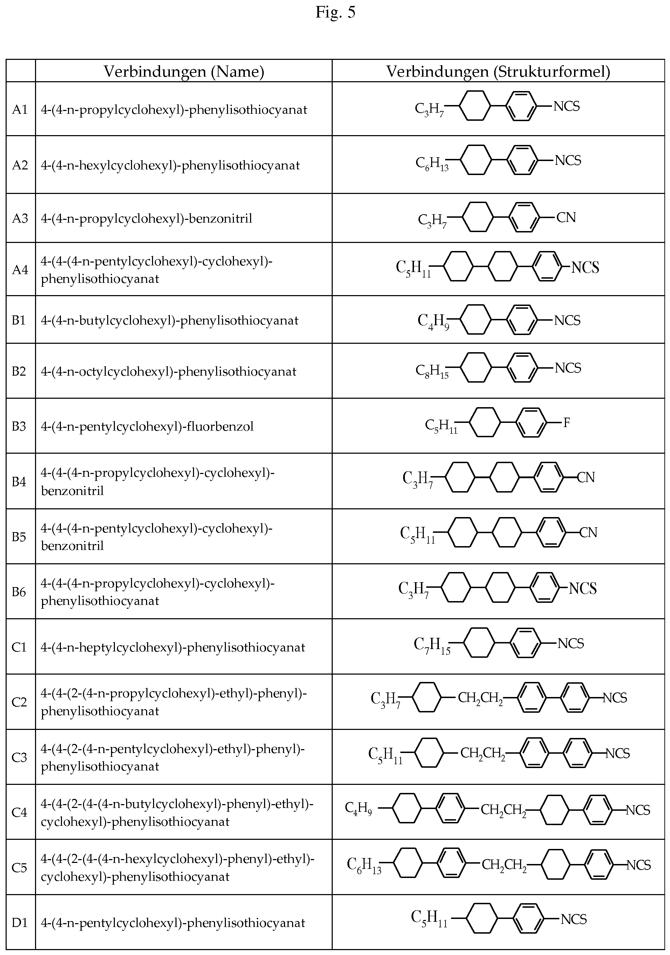

In der anliegenden Abbildung Fig. 5 sind die Strukturformeln dieser genannten flüssigkristallinen Verbindungen und ihre chemischen Namen aufgeführt. Im Falle einer Diskrepanz zwischen Strukturformeln und chemischen Namen sind die Strukturformeln verbindlich.

Die Massenanteile $w_i$ der genannten Komponenten i in der Mischung **M** sind definiert als Quotient der Masse $m_i$ einer Komponente i in der Mischung **M**, und der Summe der Massen $m_\Sigma$ aller j in der Mischung **M** enthaltenen flüssigkristallinen Komponenten:

$$w_i = m_i / m_\Sigma = m_i / \sum_{i=1}^{j} m_i \; .$$

Gemäß der Erfindung enthält die Mischung **M** die folgenden Massenanteile der genannten Verbindungen:

A: A1: 11 % bis 21 %, A2: 14 % bis 25 %; A3: 11 bis 18 %, A4: 10 % bis 17 %,
B: B1: 3 % bis 9,9 %, B2: 1 % bis 3 %, B3: 4 % bis 9 %, B4: 2 % bis 8 %, B5: 3 % bis 8 %, B6: 2 % bis 6 %,
C: C1 bis C5: jeweils unabhängig voneinander mindestens 0,4 % und höchstens 2,2 %, zusammen jedoch nicht mehr als 10 %,
D: D1: mindestens 0,5 % und höchstens 2,5 %.

Dabei ist es für die Erfindung wesentlich, dass jede der genannten Komponenten A1 bis A4, B1 bis B6, C1 bis C5, und D1 in der erfindungsgemäßen Mischung mit einem Massenanteil innerhalb der für die genannten Haupt-, Sekundär-, Tertiär- und Quartär-Komponenten angegebenen Intervalle vertreten ist. Dabei sind die Massenanteile für die jeweilige individuelle Komponente aus dem für die jeweilige individuelle Komponente angegebenen Intervall auszuwählen.

Weiter sind solche Mischungen unter den im vorigen Absatz genannten bevorzugt, wobei jeweils der Massenanteil einer der Hauptkomponenten oder Sekundärkomponenten in den folgenden Bereichen liegt, und die anderen Haupt- und Sekundärkomponenten sowie die Tertiär-und Quartär-Komponenten in den im vorvorigen Absatz genannten Bereichen liegen:

- Mischungen **M,** wobei der Massenanteil der Komponente A1 von 12 % bis 20 % beträgt,
- Mischungen **M,** wobei der Massenanteil der Komponente A2 von 15 % bis 24 % beträgt,
- Mischungen **M,** wobei der Massenanteil der Komponente A3 von 12 bis 17 % beträgt,
- Mischungen **M,** wobei der Massenanteil der Komponente A4 von 10,2 % bis 16 % beträgt,
- Mischungen **M,** wobei der Massenanteil der Komponente B1 von 4 % bis 9,8 % beträgt,

- Mischungen **M,** wobei der Massenanteil der Komponente B2 von 2 % bis 2,9 % beträgt,
- Mischungen **M,** wobei der Massenanteil der Komponente B3 von 5 % bis 8 % beträgt,
- Mischungen **M,** wobei der Massenanteil der Komponente B4 von 2,4 % bis 7,8 % beträgt,
- Mischungen **M,** wobei der Massenanteil der Komponente B5 von 4 % bis 7 % beträgt, und
- Mischungen **M,** wobei der Massenanteil der Komponente B6 von 3,5 % bis 5,5 % beträgt.

Besonders bevorzugt sind die folgenden Massenanteile für die genannten Verbindungen in der Mischung **M:**

A: A1: 12 % bis 20 %, A2: 15 % bis 24 %; A3: 12 bis 17 %, A4: 10,2 % bis 16 %,
B: B1: 4 % bis 9,8 %, B2: 2 % bis 2,9 %, B3: 5 % bis 8 %, B4: 2,4 % bis 7,8 %, B5: 4 % bis 7 %, B6: 3,5 % bis 5,5 %,
C: C1 bis C5: jeweils unabhängig voneinander mindestens 0,4 % und höchstens 2,1 %, zusammen jedoch nicht mehr als 8 %,
D: D1: mindestens 0,8 % und höchstens 2,3 %.

Bevorzugt ist die Summe der Massenanteile der genannten Komponenten 100 %, das bedeutet, dass die Mischung **M** vorzugsweise keine weiteren Bestandteile enthält. Abweichungen von den genannten Zusammensetzungen führen zu einer Verringerung des Temperaturbereichs, in dem diese Flüssigkristall-Fenster eingesetzt werden können. Je weiter der Massenanteil für eine der genannten Komponenten außerhalb des für diese jeweils genannten Intervalls liegt, umso nachteiliger wird die Größe des nutzbaren Temperaturbereichs beeinflusst.

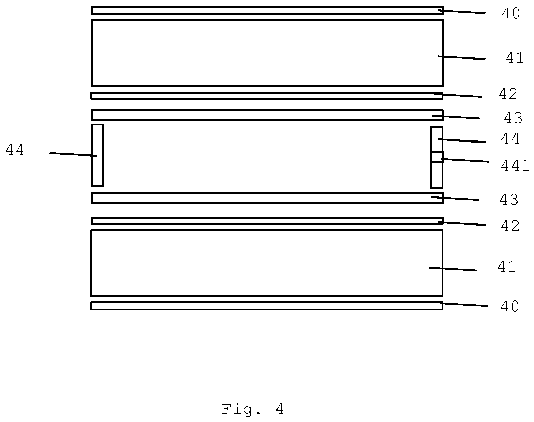

Die Sichtfenster, die mit den Flüssigkristall-Mischungen **M** hergestellt werden können, bestehen aus einer Zelle enthaltend zwei Glas-, Quarz-, oder Kunststoff-Platten, die mit einer leitfähigen transparenten Schicht (bevorzugt Indium-Zinn-Oxid-Schichten "ITO" bei Glas- oder Quarz-Platten, oder insbesondere bei Polymer-Substraten vorteilhaft Schichten aus leitfähigen organischen Polymeren wie zum Beispiel ein PEDOT:PSS-Material (poly[3,4-ethylen-dioxy-thiophen]:poly[styrolsulfonsäure]) ) überzogen sind. Auf mindesten einer dieser leitfähigen Schichten in einer solchen Zelle wird in bevorzugter Weise eine Ausrichtungsschicht (alignment layer) für das Flüssigkristall-Material aufgetragen. Der Aufbau eines erfindungsgemäßen Sichtfensters mit Flüssigkristall-Füllung ist in der Abbildung Fig. 4 dargestellt. Dabei sind beispielsweise die bevorzugten Materialdicken der einzelnen Bestandteile: Glas-oder Quarz-Platten: 2 mm bis 4 mm; Polymer-Substrate wie Polyethylenterephthalat: 1 mm bis 3 mm; Polycarbonat: 2 mm bis 12 mm; Polymethylmethacrylat: 6 mm. Die Dicke der leitfähigen Beschichtung variiert zwischen üblicherweise 80 nm bis 350 nm (ITO) und 25 nm bis 150 nm (PEDOT:PSS). Die Dicke der Ausrichtungsschichten (alignment layer, bevorzugt aus Polyimid) liegt üblicherweise im Bereich von 100 nm. Die lichte Weite der Zelle beträgt üblicherweise zwischen 3 $\mu$m und 10 $\mu$m .

Für die erfindungsgemäße Anwendung werden die Sichtfenster in einer abgerundeten Form, meist kreisförmig oder ellipsenförmig ausgeführt, und in eine Fassung für eine Brille eingesetzt.

Die Steuerung umfasst eine Bedienungsvorrichtung, die eine Sendevorrichtung gegebenenfalls mit Antenne einschließt, eine Empfangsvorrichtung und eine Brille mit Sichtfenstern und Halterung. Ein Treiber für die Sichtfenster, die Empfangsvorrichtung selbst, gegebenenfalls mit einer Antenne, sowie eine Stromversorgung für die Empfangsvorrichtung und die Brille werden in bevorzugter Weise in die Halterung für die Brille integriert. Bevorzugt werden auch in die Bedienungsvorrichtung die Sendevorrichtung und eine Stromversorgung für Bedienungsvorrichtung und Sendevorrichtung integriert.

Mit der Bedienungsvorrichtung kann ein Signal an die Empfangsvorrichtung gesendet werden, wobei die Sichtfenster dann durch Anlegen einer Spannung an die mit der erfindungsgemäßen Flüssigkristallmischung gefüllten Zelle abgedunkelt werden, und damit die Sicht des die Brille tragenden Tieres behindern oder ganz verhindern. Mit einem weiteren Signal kann die Spannung an der Zelle abgeschaltet werden, und das Tier kann wieder durch die Brille sehen. Es ist bevorzugt auch möglich, die Steuerungselektronik für die Zellen so zu konfigurieren, dass ohne angelegte Spannung kein Lichtdurchgang möglich ist, die Brille also im Ruhezustand abgedunkelt ist, und nur durch Anlegen einer Spannung durchsichtig wird. Dies verhindert, dass ein undefinierter Zustand der Brille entstehen kann, wenn sich die Brille außerhalb des Sendebereichs der Sendevorrichtung befindet, oder wenn die Stromquelle der Empfangsvorrichtung erschöpft ist.

Bevorzugt ist in mindestens einem der Sichtfenster eine Kontrollvorrichtung angebracht, umfassend eine Lichtquelle, und einen lichtempfindlichen Sensor, die auf jeweils sich gegenüberliegenden Seiten des Sichtfensters angebracht sind und mit deren Hilfe der jeweilige Zustand des Sichtfensters, also "offen / durchlässig" oder "geschlossen / undurchlässig", überprüft werden kann. Dabei kann der Einfluss von Fremdlicht ausgeschlossen werden, wenn die Lichtquelle bezüglich ihrer Helligkeit zeitlich moduliert ist, und die Auswertungselektronik des lichtempfindlichen Sensors nur solches Licht erfasst, das mit der Modulationsfrequenz der Lichtquelle gleichphasig ist.

Die Erfindung wird weiter erläutert durch die Abbildungen, Fig. 1 bis Fig. 4. Dabei zeigen die Abbildungen

Fig. 1     eine Brille gemäß der Erfindung mit fernauslösbarer Verdunklung, im durchsichtigen Zustand,
Fig. 2     eine Bedienungsvorrichtung für die genannte Brille,

Fig. 3    eine Brille gemäß der Erfindung mit fernauslösbarer Verdunklung, im undurchsichtigen Zustand, und

Fig. 4    den prinzipiellen Aufbau eines Sichtfensters gemäß der Erfindung.

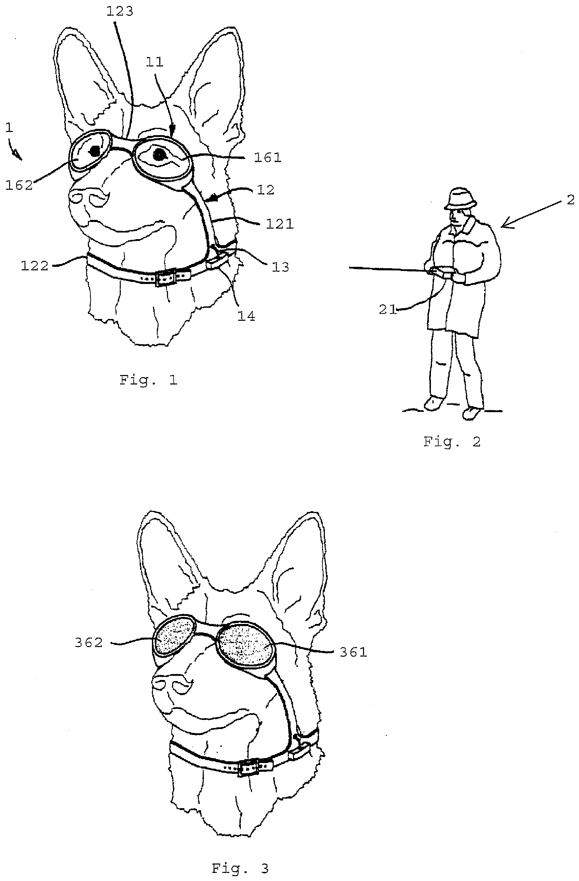

In der Fig. 1 ist ein Hund **1** mit einer Brille **11** gemäß der Erfindung in Teilansicht dargestellt, an dessen Kopf die Brille **11** durch eine Halterung **12** befestigt ist. Die Halterung **12** umfasst ein Halsband **122,** einen Riemen **121,** der das Halsband **122** mit einem Sichtfenster **162** in durchsichtigem Zustand verbindet. Über den Riemen **123** ist das Sichtfenster **162** über den Nasenhöcker mit dem gleichartigen Sichtfenster **161** ebenfalls im durchsichtigen Zustand verbunden, das wiederum durch einen in der Zeichnung nicht dargestellten Riemen **121'** symmetrisch zum Riemen **121** mit dem Halsband **122** verbunden ist. Am Halsband **122** ist weiter eine Empfangsvorrichtung **14** befestigt, die zusätzlich eine Antenne **13** trägt. Die Stromversorgung ist vorteilhafterweise in dem Gehäuse der Empfangsvorrichtung **14** integriert. Nicht dargestellt sind in der Fig. 1 die elektrisch leitenden Verbindungen von der Empfangsvorrichtung **14** zu den Sichtfenstern **161** und **162.**

Die Fig. 2 zeigt eine Person **2,** mit eine Bedienungsvorrichtung **21** nebst Antenne, in deren Gehäuse ebenfalls eine Stromversorgung integriert ist. Durch diese Bedienungsvorrichtung **21** wird über Funk und die zugehörige Empfangsvorrichtung **14** die Brille **11** gesteuert.

In der Fig. 3 schließlich ist die Brille **11** im undurchsichtigen Zustand dargestellt; beide Sichtfenster **361** und **361** sind verdunkelt.

Der prinzipielle Aufbau eines der Sichtfenster **161** und **162** bzw. **361** und **362** ist in der Fig. 4 dargestellt; die Schichtenfolge ist symmetrisch bezüglich der durch den Abstandshalter **44** (spacer) gebildeten Hohlraum, in den die Flüssigkristallmischung **M** gefüllt wird; die äußerste Schicht **40** ist eine Polarisationsfolie, die gegebenenfalls auf der Außenseite mit einer Entspiegelungsschicht ergänzt sein kann, es folgt das die Zelle stabilisierende Substrat **41** aus Glas, Quarz, oder einem transparenten Polymer, das nach innen hin mit einer dünnen leitfähigen Schicht **42** bevorzugt aus Indium-Zinn-Oxid (ITO) oder einem leitfähigen Polymer bedeckt ist, anschließend ist die Ausrichtungsschicht **43,** die dann eine Wand des Innenraums der Zelle bildet. Nach dem Abstandshalter **44** folgen spiegelbildlich eine Ausrichtungsschicht **43,** eine dünne leitfähige Schicht **42,** das Substrat **41,** und eine weitere Polarisationsfolie **40,** die wieder gegebenenfalls eine Entspiegelungsschicht trägt. Durch die Öffnung **441** in dem Abstandshalter **44** kann die Zelle befüllt werden. Nach der Befüllung wird die Öffnung **441** selbstverständlich dicht verschlossen.

Die Ausführung der Sichtfenster mit einem Polymer-Substrat und einer elektrisch leitfähigen Beschichtung mit einem elektrisch leitenden Polymer ist für den vorgesehenen Anwendungszweck günstiger, da Polymer-Substrate leichter und robuster als Glas- oder Quarz-Substrate sind.

**Beispiele**

Es wurden drei Mischungen M1, M2 und M3 hergestellt, aus den Komponenten A1 bis A4, B1 bis B6, C1 bis C5, und D1, gemäß der folgenden Tabelle:

Tabelle 1 Zusammensetzung der Mischungen M1, M2 und M3

| Mischung: | M1 | M2 | M3 |
|---|---|---|---|
| Komponente: | Massenanteil $w_i$ in % | | |
| A1 | 20,0 | 12,0 | 17,98 |
| A2 | 15,8 | 23,8 | 17,34 |
| A3 | 16,2 | 12,2 | 16,5 |
| A4 | 14,6 | 10,4 | 15,6 |
| B1 | 5,5 | 9,5 | 5,5 |
| B2 | 2,0 | 2,2 | 2,0 |
| B3 | 6,9 | 5,9 | 5,9 |
| B4 | 2,5 | 7,5 | 2,5 |
| B5 | 5,0 | 5,0 | 6,0 |
| B5 | 4,7 | 4,1 | 3,9 |
| C1 | 1,8 | 1,8 | 1,78 |
| C2 | 0,5 | 0,8 | 0,5 |

(fortgesetzt)

| Mischung: | M1 | M2 | M3 |
|---|---|---|---|
| Komponente: | Massenanteil $w_i$ in % | | |
| C3 | 0,5 | 0,8 | 0,5 |
| C4 | 1,0 | 1,5 | 1,0 |
| C5 | 1,0 | 1,5 | 2,0 |
| D1 | 2,0 | 1,0 | 1,0 |
| Summe | 100 | 100 | 100 |

Die folgenden Eigenschaften wurden an diesen Mischungen und an einer gefüllten Zelle mit einer lichten Weite von 8 μm (0,008 mm) gemessen:

Tabelle 2 physikalische und elektrooptische Eigenschaften

| Mischung: | | M1 | M2 | M3 |
|---|---|---|---|---|
| physikalische Größe | Einheit | | | |
| Schmelztemperatur | °C | - 45 | -50 | -50 |
| Klärtemperatur | °C | 92,4 | 95,2 | 95,2 |
| $\Delta n$ (bei 589 nm, 20 °C) | | 0,1722 | 0,1778 | 0,1768 |
| Rotationsviskosität bei 20 °C | mPa·s | 16 | 18 | 17 |
| Rotationsviskosität bei 0 °C | mPa·s | 54 | 58 | 55 |
| Rotationsviskosität bei -20 °C | mPa·s | 235 | 250 | 240 |
| Rotationsviskosität bei -40 °C | mPa·s | 3800 | 4000 | 3900 |
| $\Delta \epsilon$ (bei 1 kHz, 20 °C) | | 7,6 | 7,8 | 7,7 |
| $V(10,0,20)$ | V | 2,06 | 2,05 | 2,04 |
| $V(90,0,20)$ | V | 2,85 | 2,94 | 2,91 |
| $[V(90,0,20) - V(10,0,20)] / V(10,0,20)$ | % | 38,3 | 43,0 | 42,1 |
| $\Delta V / \Delta \vartheta$ | mV/K | 5,5 | 5,0 | 4,5 |
| $t_{on}$ (bei -40 °C) | ms | 310 | 280 | 220 |
| $t_{off}$ (bei -40 °C) | ms | 960 | 940 | 705 |

| $\Delta n$ | Doppelbrechung (birefringence), gemessen mit Licht der Wellenlänge $\lambda$ = 589 nm, und bei 20 °C |
|---|---|
| $\Delta \epsilon$ | dielektrische Anisotropie (dielectric anisotropy), gemessen bei 1 kHz und 20 °C |
| $V$ | Schwellenspannung (threshold voltage), $V$ ($T$ / %, $\alpha$ / °, $\vartheta$ / °C), gemessen bei dem angegebenen Transmissionsgrad (transmittance) $T = I / I_0$ in %, wobei $I_0$ und $I$ die Lichtintensität vor und nach dem Durchtritt durch das betrachtete Medium ist, $\alpha$ der Beobachtungswinkel in °, und $\vartheta$ die Celsiustemperatur in °C |
| $\Delta V / \Delta \vartheta$ | Temperaturabhängigkeit der Schwellenspannung |
| $t_{on}$ und $t_{off}$ | Einschaltzeit und Ausschaltzeit |

Selbst bei der niedrigsten gemessenen Temperatur von -40 °C lassen sich also mit den erfindungsgemäßen Mischungen akzeptable Schaltzeiten erreichen.

**Liste der Bezugszeichen**

1        Hund

| 11 | Brille |
|---|---|
| 12 | Halterung für die Brille 11 |
| 121 | Riemen |
| 122 | Halsband |
| 123 | Riemen |
| 13 | Antenne für Empfangsvorrichtung 14 |
| 14 | Empfangsvorrichtung |
| 161 | Sichtfenster (in durchsichtigem Zustand) |
| 162 | Sichtfenster (in durchsichtigem Zustand) |
| 2 | Person |
| 21 | Bedienungsvorrichtung mit Antenne |
| 361 | Sichtfenster (in undurchsichtigem Zustand) |
| 362 | Sichtfenster (in undurchsichtigem Zustand) |
| 4 | Zelle |
| 40 | Polarisationsfolie |
| 41 | Glassubstrat |
| 42 | elektrisch leitfähige Schicht |
| 43 | Ausrichtungsschicht |
| 44 | Abstandshalter |
| 441 | Öffnung |

**Patentansprüche**

1. Mischungen **M** aus flüssigkristallinen Materialien, enthaltend die folgenden Komponenten:

Hauptkomponenten A (Massenanteil der genannten Komponente in der Mischung von jeweils mindestens 10 % bis 25 %):

A1 - 4-(4-n-propyl-cyclohexyl)-phenylisothiocyanat
A2 - 4-(4-n-hexyl-cyclohexyl)-phenylisothiocyanat
A3 - 4-(4-n-propyl-cyclohexyl)-benzonitril
A4 - 4-(4-(4-n-pentyl-cyclohexyl)-cyclohexyl)-phenylisothiocyanat

Sekundärkomponenten B (Massenanteil der genannten Komponente in der Mischung von jeweils 2 % bis weniger als 10 %):

B1 - 4-(4-n-butylcyclohexyl)-phenylisothiocyanat
B2 - 4-(4-n-octylcyclohexyl)-phenylisothiocyanat
B3 - 4-(4-n-pentylcyclohexyl)-fluorbenzol
B4 - 4-(4-(4-n-propylcyclohexyl)-cyclohexyl)-benzonitril
B5 - 4-(4-(4-n-pentylcyclohexyl)-cyclohexyl)-benzonitril
B6 - 4-(4-(4-n-propylcyclohexyl)-cyclohexyl)-phenylisothiocyanat

Tertiärkomponenten C (Massenanteil der genannten Komponente in der Mischung von jeweils 0,3 % bis höchstens 8 %):

C1 - 4-(4-n-heptylcyclohexyl)-phenylisothiocyanat
C2 - 4-(4-(2-(4-n-propylcyclohexyl)-ethyl)-phenyl)-phenylisothiocyanat
C3 - 4-(4-(2-(4-n-pentylcyclohexyl)-ethyl)-phenyl)-phenylisothiocyanat
C4 - 4-(4-(2-(4-(4-n-butylcyclohexyl)-phenyl)-ethyl)-cyclohexyl)-phenylisothiocyanat
C5 - 4-(4-(2-(4-(4-n-hexylcyclohexyl)-phenyl)-ethyl)-cyclohexyl)-phenylisothiocyanat

Quartärkomponenten D (Massenanteil der genannten Komponente in der Mischung von jeweils 0,1 % bis 2,5 %):

D1 - 4-(4-n-pentylcyclohexyl)-phenylisothiocyanat,

**dadurch gekennzeichnet, dass** die Mischungen **M** die folgenden Massenanteile der genannten Verbindungen enthalten:

A: A1: 11 % bis 21 %, A2: 14 % bis 25 %; A3: 11 bis 18 %, A4: 10 % bis 17 %,
B: B1: 2 % bis 9,9 %, B2: 1 % bis 3 %, B3: 4 % bis 9 %, B4: 2 % bis 8 %, B5: 3 % bis 8 %, B6: 2 % bis 6 %,
C: C1 bis C5: jeweils unabhängig voneinander mindestens 0,4 % und höchstens 2,2 %, zusammen jedoch nicht mehr als 10 %,
D: D1: mindestens 0,5 % und höchstens 2,5 %.

2. Mischungen **M** gemäß Anspruch 1, enthaltend die folgenden Massenanteile der genannten Verbindungen:

A: A1: 12 % bis 20 %, A2: 15 % bis 24 %; A3: 12 bis 17 %, A4: 10,2 % bis 16 %,
B: B1: 4 % bis 9,8 %, B2: 2 % bis 2,9%, B3: 5 % bis 8 %, B4: 2,4 % bis 7,8 %, B5: 4 % bis 7 %, B6: 3,5 % bis 5,5 %.

3. Mischungen **M** gemäß Anspruch 1, wobei der Massenanteil der Komponente A1 von 12 % bis 20 % beträgt, und die Massenanteile der Komponenten C1 bis C5 jeweils unabhängig voneinander mindestens 0,4 % und höchstens 2,1 %, zusammen jedoch nicht mehr als 8 %, betragen, und der Massenanteil der Komponente D1 mindestens 0,8 % und höchstens 2,3 % beträgt.

4. Mischungen **M** gemäß Anspruch 1, wobei der Massenanteil der Komponente A2 von 15 % bis 24 % beträgt, und die Massenanteile der Komponenten C1 bis C5 jeweils unabhängig voneinander mindestens 0,4 % und höchstens 2,1 %, zusammen jedoch nicht mehr als 8 %, betragen, und der Massenanteil der Komponente D1 mindestens 0,8 % und höchstens 2,3 % beträgt.

5. Mischungen **M** gemäß Anspruch 1, wobei der Massenanteil der Komponente A3 von 12 bis 17 % beträgt, und die Massenanteile der Komponenten C1 bis C5 jeweils unabhängig voneinander mindestens 0,4 % und höchstens 2,1 %, zusammen jedoch nicht mehr als 8 %, betragen, und der Massenanteil der Komponente D1 mindestens 0,8 % und höchstens 2,3 % beträgt.

6. Mischungen **M** gemäß Anspruch 1, wobei der Massenanteil der Komponente A4 von 10,2 % bis 16 % beträgt, und die Massenanteile der Komponenten C1 bis C5 jeweils unabhängig voneinander mindestens 0,4 % und höchstens 2,1 %, zusammen jedoch nicht mehr als 8 %, betragen, und der Massenanteil der Komponente D1 mindestens 0,8 % und höchstens 2,3 % beträgt.

7. Mischungen **M** gemäß Anspruch 1, wobei der Massenanteil der Komponente B1 von 4 % bis 9,8 % beträgt, und die Massenanteile der Komponenten C1 bis C5 jeweils unabhängig voneinander mindestens 0,4 % und höchstens 2,1 %, zusammen jedoch nicht mehr als 8 %, betragen, und der Massenanteil der Komponente D1 mindestens 0,8 % und höchstens 2,3 % beträgt.

8. Mischungen **M** gemäß Anspruch 1, wobei der Massenanteil der Komponente B2 von 2 % bis 2,9 % beträgt, und die Massenanteile der Komponenten C1 bis C5 jeweils unabhängig voneinander mindestens 0,4 % und höchstens 2,1 %, zusammen jedoch nicht mehr als 8 %, betragen, und der Massenanteil der Komponente D1 mindestens 0,8 % und höchstens 2,3 % beträgt.

9. Mischungen **M** gemäß Anspruch 1, wobei der Massenanteil der Komponente B3 von 5 % bis 8 % beträgt, und die Massenanteile der Komponenten C1 bis C5 jeweils unabhängig voneinander mindestens 0,4 % und höchstens 2,1 %, zusammen jedoch nicht mehr als 8 %, betragen, und der Massenanteil der Komponente D1 mindestens 0,8 % und höchstens 2,3 % beträgt.

10. Mischungen **M** gemäß Anspruch 1, wobei der Massenanteil der Komponente B4 von 2,4 % bis 7,8 % beträgt, und die Massenanteile der Komponenten C1 bis C5 jeweils unabhängig voneinander mindestens 0,4 % und höchstens 2,1 %, zusammen jedoch nicht mehr als 8 %, betragen, und der Massenanteil der Komponente D1 mindestens 0,8 % und höchstens 2,3 % beträgt.

11. Mischungen **M** gemäß Anspruch 1, wobei der Massenanteil der Komponente B5 von 4 % bis 7 % beträgt, und die Massenanteile der Komponenten C1 bis C5 jeweils unabhängig voneinander mindestens 0,4 % und höchstens 2,1 %, zusammen jedoch nicht mehr als 8 %, betragen, und der Massenanteil der Komponente D1 mindestens 0,8 % und höchstens 2,3 % beträgt.

12. Mischungen **M** gemäß Anspruch 1, wobei der Massenanteil der Komponente B6 von 3,5 % bis 5,5 % beträgt, und die Massenanteile der Komponenten C1 bis C5 jeweils unabhängig voneinander mindestens 0,4 % und höchstens 2,1 %, zusammen jedoch nicht mehr als 8 %, betragen, und der Massenanteil der Komponente D1 mindestens 0,8 % und höchstens 2,3 % beträgt.

13. Sichtfenster (161, 162, 361, 362) für eine Brille (11) bestehend aus einer Zelle (4) enthaltend zwei Glas-, Quarz-, oder Kunststoff-Platten als Substrat (41), die mit einer elektrisch leitfähigen transparenten Schicht (42) überzogen sind, wobei die Zelle (4) mit einer Flüssigkristall-Mischung **M** gemäß einem der vorangehenden Ansprüche 1 bis 12 gefüllt sind.

14. Brille (11) für Tiere mit fernauslösbarer Verdunklung umfassend ein Sichtfenster (161, 162, 361, 362) gemäß Anspruch 13 für jedes Auge, eine auf den Kopf des Tieres anzupassende Halterung (12) für die Sichtfenster (161, 162, 361, 362), und eine Steuerung umfassend eine Bedienungsvorrichtung (21) und eine Empfangsvorrichtung (14) für die Sichtfenster (161, 162, 361, 362), wobei jedes Sichtfenster (161, 162, 361, 362) in einen offenen, lichtdurchlässigen Zustand (161, 162) und in einen geschlossenen, im wesentlichen lichtundurchlässigen Zustand (361, 362) versetzt werden durch die Steuerung, die aus der Ferne kontrolliert werden kann durch die Bedienungsvorrichtung (21) sowie die Empfangsvorrichtung (14).

Fig. 1

Fig. 2

Fig. 3

Fig. 4

Fig. 5

| | Verbindungen (Name) | Verbindungen (Strukturformel) |
|---|---|---|
| A1 | 4-(4-n-propylcyclohexyl)-phenylisothiocyanat | $C_3H_7$—⬡—◯—NCS |
| A2 | 4-(4-n-hexylcyclohexyl)-phenylisothiocyanat | $C_6H_{13}$—⬡—◯—NCS |
| A3 | 4-(4-n-propylcyclohexyl)-benzonitril | $C_3H_7$—⬡—◯—CN |
| A4 | 4-(4-(4-n-pentylcyclohexyl)-cyclohexyl)-phenylisothiocyanat | $C_5H_{11}$—⬡—⬡—◯—NCS |
| B1 | 4-(4-n-butylcyclohexyl)-phenylisothiocyanat | $C_4H_9$—⬡—◯—NCS |
| B2 | 4-(4-n-octylcyclohexyl)-phenylisothiocyanat | $C_8H_{15}$—⬡—◯—NCS |
| B3 | 4-(4-n-pentylcyclohexyl)-fluorbenzol | $C_5H_{11}$—⬡—◯—F |
| B4 | 4-(4-(4-n-propylcyclohexyl)-cyclohexyl)-benzonitril | $C_3H_7$—⬡—⬡—◯—CN |
| B5 | 4-(4-(4-n-pentylcyclohexyl)-cyclohexyl)-benzonitril | $C_5H_{11}$—⬡—⬡—◯—CN |
| B6 | 4-(4-(4-n-propylcyclohexyl)-cyclohexyl)-phenylisothiocyanat | $C_3H_7$—⬡—⬡—◯—NCS |
| C1 | 4-(4-n-heptylcyclohexyl)-phenylisothiocyanat | $C_7H_{15}$—⬡—◯—NCS |
| C2 | 4-(4-(2-(4-n-propylcyclohexyl)-ethyl)-phenyl)-phenylisothiocyanat | $C_3H_7$—⬡—CH$_2$CH$_2$—◯—◯—NCS |
| C3 | 4-(4-(2-(4-n-pentylcyclohexyl)-ethyl)-phenyl)-phenylisothiocyanat | $C_5H_{11}$—⬡—CH$_2$CH$_2$—◯—◯—NCS |
| C4 | 4-(4-(2-(4-(4-n-butylcyclohexyl)-phenyl)-ethyl)-cyclohexyl)-phenylisothiocyanat | $C_4H_9$—⬡—◯—CH$_2$CH$_2$—⬡—◯—NCS |
| C5 | 4-(4-(2-(4-(4-n-hexylcyclohexyl)-phenyl)-ethyl)-cyclohexyl)-phenylisothiocyanat | $C_6H_{13}$—⬡—◯—CH$_2$CH$_2$—⬡—◯—NCS |
| D1 | 4-(4-n-pentylcyclohexyl)-phenylisothiocyanat | $C_5H_{11}$—⬡—◯—NCS |

Europäisches
Patentamt

European
Patent Office

Office européen
des brevets

## EUROPÄISCHER RECHERCHENBERICHT

Nummer der Anmeldung

EP 18 20 0153

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DD 219 497 A5 (WOJSKOWA AKAD TECH [PL]) 6. März 1985 (1985-03-06) * Ansprüche; Beispiele; Verbindungen * ----- | 1-12 | INV. C09K19/30 A01K13/00 G02B1/04 G02C7/10 |
| A | CN 103 333 699 A (INST PETROCHEMISTRY HEILONGJIANG ACADEMY OF SCIENCE) 2. Oktober 2013 (2013-10-02) * Ansprüche; Beispiele; Verbindungen * ----- | 1-12 | |
| A,D | US 6 311 645 B1 (BROWN JOSEPH S [US]) 6. November 2001 (2001-11-06) * Ansprüche; Abbildungen; Beispiele * ----- | 13,14 | |

RECHERCHIERTE SACHGEBIETE (IPC)

C09K

Der vorliegende Recherchenbericht wurde für alle Patentansprüche erstellt

| Recherchenort | Abschlußdatum der Recherche | Prüfer |
|---|---|---|
| Den Haag | 1. März 2019 | Serbetsoglou, A |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
....................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 20 0153

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-03-2019

| Im Recherchenbericht angeführtes Patentdokument | Datum der Veröffentlichung | Mitglied(er) der Patentfamilie | Datum der Veröffentlichung |
|---|---|---|---|
| DD 219497 A5 | 06-03-1985 | DD 219497 A5<br>DE 3462602 D1<br>EP 0126883 A1<br>SU 1376949 A3<br>US 4528116 A | 06-03-1985<br>16-04-1987<br>05-12-1984<br>23-02-1988<br>09-07-1985 |
| CN 103333699 A | 02-10-2013 | KEINE | |
| US 6311645 B1 | 06-11-2001 | AU 2002307481 A1<br>CN 1536960 A<br>EP 1383374 A2<br>US 6311645 B1<br>WO 02089698 A2 | 18-11-2002<br>13-10-2004<br>28-01-2004<br>06-11-2001<br>14-11-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6311645 B1

**In der Beschreibung aufgeführte Nicht-Patentliteratur**

- **M. SCHADT.** *Annu. Rev. Mater. Sci.,* 1997, 311